# EUROPEAN PATENT APPLICATION

(11) **EP 4 626 098 A1**
(43) Date of publication of application: **01.10.2025**
(21) Application number: 25166076.7
(22) Date of filing: 25.03.2025
(51) Int. Cl.: H04W 72/00

(54) **METHOD, APPARATUS AND COMPUTER PROGRAM**

(30) Priority: 25.03.2024 GB 202404262
(71) Applicant: Nokia Technologies Oy, 02610 Espoo (FI)
(72) Inventor: PIIPPONEN, Antti-Veikko Sakari, Espoo (FI); LILJESTRÖM, Henrik Christian, Helsinki (FI); AITTO-OJA, Timo Matias, Oulu (FI)
(74) Representative: Nokia EPO representatives

(57) **Abstract**

An apparatus comprising: means for transmitting one or more signals in one or more first time slots on a first frequency resource to one or more user equipment; and means for receiving one or more signals in one or more second time slots on the first frequency resource from one or more user equipment, and for receiving one or more signals in one or more third time slots on a second frequency resource, the first and second frequency resources being separated by a guard band, wherein the one or more first time slots are different to the one or more second time slots, one or more of the first time slots are the same as one or more of the third time slots.

## Description

### FIELD

Various example embodiments of this disclosure generally relate to communication systems, and in particular - but not exclusively - to apparatus, methods and computer programs relating to transmitting and receiving of signals.

### BACKGROUND

A communication network can be seen as a facility that enables communications between two or more communication devices, or provides communication devices access to a data network. A mobile or wireless communication network is one example of a communication network. A communication device may be provided with a service by an application server.

Such communication networks operate in according with standards, such as those provided by 3GPP (Third Generation Partnership Project) or ETSI (European Telecommunications Standards Institute). Examples of standards include the so-called 5G (5th Generation) standards promulgated by 3GPP.

### SUMMARY

Some example embodiments of this disclosure will be described with respect to certain aspects. These aspects are not intended to indicate key or essential features of the various example embodiments of this disclosure, nor are they intended to be used to limit the scope of thereof. Other features, aspects, and elements will be readily apparent to a person skilled in the art in view of this disclosure.

According to a first aspect, there is provided an apparatus comprising: means for transmitting one or more signals in one or more first time slots on a first frequency resource to one or more user equipment; and means for receiving one or more signals in one or more second time slots on the first frequency resource from one or more user equipment, and for receiving one or more signals in one or more third time slots on a second frequency resource, the first and second frequency resources being separated by a guard band, wherein the one or more first time slots are different to the one or more second time slots, one or more of the first time slots are the same as one or more of the third time slots.

The apparatus may comprise means for determining the one or more time first slots in which the means for transmitting is to transmit and for determining the one or more second time slots and the one more third time slots in which the means for receiving is to receive.

One or more the second time slots may be the same as one or more of the third time slots.

The means for transmitting may be for transmitting control information in one or more of the first time slots, and the one or more third time slots may exclude the one more or more first time slots in which the control information is transmitted.

The first and second frequency resources may be in a frequency range of 6425 to 7125MHz.

The second frequency resource may be provided in the lower part of the frequency range of 6425 to 7125MHz and the first frequency resource is provided in the upper part of the frequency range of 6425 to 7125MHz.

The second frequency resource may be below 6585MHz and the first frequency resource may be above 6585MHz.

The first frequency resource may be associated with a first network operator and the second frequency resource may be shared by the first network operator and one or more other network operators.

The means for transmitting may be for transmitting control information in one or more of the first time slots, the one or more first time slots used for transmitting control information being different to the third time slots.

One or more fourth time slots on the second frequency resource may be reserved for transmissions by one or more devices using an unlicensed technology.

The unlicensed technology may comprise Wi-Fi.

Remaining ones of the slots of the second frequency resource may provide the third time slots and may be reserved for uplink transmissions by one or user equpment using a licensed technology.

The one or more fourth time slots may be one or more of: the same as one or more of the second time slots; or the same as one or more first time slots in which the means for transmitting transmits control information.

The guard band may be in the region of 60 MHz with an operating frequency in the region of 6000MHz. The operating frequency may be as previously discussed.

The transmitting means and receiving means may be provided by a transceiver arrangement. The transceiver arrangement may comprise a first bandpass filter tuned to a frequency range including the first and second frequency resources and a circulator, said circulator being provided between a power amplifier and the first bandpass filter on a transmit path and the first bandpass filter and a low noise amplifier on a receive path.

The transceiver arrangement may comprise one or more second bandpass filters provided between the circulator and the low noise amplifier, at least one of the second bandpass filter being tuned to a frequency range including the first and second frequency resources.

One or more of the second band pass filters may be tuned to a frequency range including the first frequency resources.

The transceiver arrangement may comprise a third bandpass filter provided on the transmit path between the power amplifier and the circulator.

The transmitting means and receiving means may be provided by a by a transceiver arrangement. The transceiver arrangement may comprise a first bandpass filter tuned to a frequency range including the first and second frequency resources and a duplexer, said duplexer comprising a fourth bandpass filter tuned to a frequency range including the first frequency resource and a fifth bandpass filter tuned to a frequency range including the first and second frequency resources.

The transceiver arrangement may comprise a circulator, said circulator being provided between a power amplifier of the transceiver arrangement and the fourth bandpass filter on a transmit path.

The circulator may be provided between a first low noise amplifier of the transceiver arrangement and the fourth bandpass filter on a receive path.

The transceiver arrangement may comprise a second low noise amplifier provided between the output of the fifth band pass filter and an analogue to digital convertor of the transceiver arrangement, the output of the first low noise amplifier being provided to the analogue to digital convertor.

A second low noise amplifier may be provided between the output of the fifth band pass filter and a second analogue to digital convertor of the transceiver arrangement, the output of the first low noise amplifier being provided to first analogue to digital convertor.

The first bandpass filter may be arranged in parallel with the duplexer, said first bandpass filter being provided on a receive path between an antenna array of the transceiver arrangement and a low noise amplifier of the transceiver arrangement.

An output of the fifth bandpass filter may be provided to a low noise amplifier of the transceiver arrangement on a receive path.

The apparatus may be a base station. The apparatus may be a radio unit of a distributed base station arrangement. The base station may be a macro base station.

The first and second frequency resources may be received by a same radio unit.

The first and second frequency resources may be received by a shared analog to digital converter of the same radio unit.

The first and second frequency resources may be received by shared baseband processing hardware of the same radio unit.

The means for transmitting may be for transmitting with a transmit power in the region of 50dBm (or higher) on the first frequency resource and having an interference suppression of up to 100dB when the base station transmits and receives in a same time slot of the first and third time slots.

The means for transmitting may be for transmitting with a transmit power in the region of 50dBm and having an interference suppression to avoid receiver saturation in one or more third time slots when the base station transmits and receives in a same time slot of the first and third time slots.

According to a second aspect, there is provided a method comprising: transmitting one or more signals in one or more first time slots on a first frequency resource to one or more user equipment; and receiving one or more signals in one or more second time slots on the first frequency resource from one or more user equipment, and for receiving one or more signals in one or more third time slots on a second frequency resource, the first and second frequency resources being separated by a guard band, wherein the one or more first time slots are different to the one or more second time slots, one or more of the first time slots are the same as one or more of the third time slots.

The method may comprise determining the one or more time first and for determining the one or more second time slots and the one more third time slots.

One or more the second time slots may be the same as one or more of the third time slots.

The method may comprise transmitting control information in one or more of the first time slots, and the one or more third time slots may exclude the one more or more first time slots in which the control information is transmitted.

The first and second frequency resources may be in a frequency range of 6425 to 7125MHz.

The second frequency resource may be provided in the lower part of the frequency range of 6425 to 7125MHz and the first frequency resource is provided in the upper part of the frequency range of 6425 to 7125MHz.

The second frequency resource may be below 6585MHz, and the first frequency resource may be above 6585MHz.

The first frequency resource may be associated with a first network operator and the second frequency resource may be shared by the first network operator and one or more other network operators.

The method may comprise transmitting control information in one or more of the first time slots, the one or more first time slots used for transmitting control information being different to the third time slots.

One or more fourth time slots on the second frequency resource may be reserved for transmissions by one or more devices using an unlicensed technology.

The unlicensed technology may comprise Wi-Fi.

Remaining ones of the slots of the second frequency resource may provide the third time slots and may be reserved for uplink transmissions by one or user equpment using a licensed technology.

The one or more fourth time slots may be one or more of: the same as one or more of the second time slots; or the same as one or more first time slots in which the means for transmitting transmits control information.

The guard band may be in the region of 60 MHz with an operating frequency in the region of 6000MHz. The operating frequency may be as previously discussed.

The method may comprise transmitting with a transmit power in the region of 50dBm and providing an interference suppression of up to 100dB when the base station transmits and receives in a same time slot of the first and third time slots.

The method may comprise transmitting with a transmit power in the region of 50dBm and providing an interference suppression to avoid receiver saturation in one or more third time slots when the base station transmits and receives in a same time slot of the first and third time slots.

The method may be performed by an apparatus. The apparatus may be a base station. The apparatus may be a distributed unit of a base station arrangement. The apparatus may be a radio unit of a base station arrangement. The base station may be a macro base station.

According to a third aspect, there is provided a user equipment comprising: means for receiving one or more signals in one or more first time slots on a first frequency resource; and means for transmitting one or more signals in one or more second time slots on the first frequency resource, and for transmitting one or more signals in one or more third time slots on a second frequency resource, the first and second frequency resources being separated by a guard band, wherein the one or more first time slots are different to the one or more second time slots.

One or more of the first time slots may be the same as one or more of the third time slots.

The apparatus may comprise means for determining the one or more time first slots in which the means for receiving is to receive and for determining the one or more second time slots and the one more third time slots in which the means for transmitting is to transmit.

One or more the second time slots may be the same as one or more of the third time slots.

The means for receiving may be for receiving control information in one or more of the first time slots, and the one or more third time slots may exclude the one more or more first time slots in which the control information is received.

The first and second frequency resources may be in a frequency range of 6425 to 7125MHz.

The second frequency resource may be provided in the lower part of the frequency range of 6425 to 7125MHz and the first frequency resource is provided in the upper part of the frequency range of 6425 to 7125MHz.

The second frequency resource may be below 6585MHz, and the first frequency resource may be above 6585MHz.

The first frequency resource may be associated with a first network operator and the second frequency resource may be shared by the first network operator and one or more other network operators.

The means for receiving may be for receiving control information in one or more of the first time slots, the one or more first time slots used for receiving control information being different to the third time slots.

One or more fourth time slots on the second frequency resource may be reserved for transmissions by one or more devices using an unlicensed technology.

The unlicensed technology may comprise Wi-Fi.

Remaining ones of the slots of the second frequency resource may provide the third time slots and may be reserved for uplink transmissions by one or user equpment using a licensed technology.

The one or more fourth time slots may be one or more of: the same as one or more of the second time slots; or the same as one or more first time slots in which the means for receiving receives control information.

The guard band may be in the region of60 MHz with an operating frequency in the region of 6000MHz. The operating frequency may be as previously discussed.

The first and second frequency resources may be received by a same radio unit.

The first and second frequency resources may be received by a shared analog to digital converter of the same radio unit.

The first and second frequency resources may be received by shared baseband processing hardware of the same radio unit.

The transmitting means may be for transmitting in accord with licensed communication requirements when transmitting in one or more of the third time slots.

The transmitting means may be for transmitting in accord with license exempt communication requirements when transmitting in one or more fourth time slots on the second frequency resources, said third and fourth time slots being different.

The user equipment may comprise a power amplifier which is used for both the first and second frequency resources.

The user equipment may comprise a power amplifier which is used for both licenced and license exempt communications.

The user equipment may comprise means for adjusting a transmission in accord with license exempt communication requirements based on a configuration associated with the second frequency configuration or based on activity.

The second frequency configuration may indicate to the user equipment the one or more fourth time slots to be used for license exempt communication.

The activity may relate to which one or more third time slots have been scheduled and which are not to be used license exempt communication.

According to a fourth aspect, there is provided a method comprising: receiving one or more signals in one or more first time slots on a first frequency resource; and transmitting one or more signals in one or more second time slots on the first frequency resource, and for transmitting one or more signals in one or more third time slots on a second frequency resource, the first and second frequency resources being separated by a guard band, wherein the one or more first time slots are different to the one or more second time slots.

One or more of the first time slots may be the same as one or more of the third time slots.

The method may comprise determining the one or more time first slots in which the means for receiving is to receive and for determining the one or more second time slots and the one more third time slots in which the means for transmitting is to transmit.

One or more the second time slots may be the same as one or more of the third time slots.

The method may comprise receiving control information in one or more of the first time slots, and the one or more third time slots may exclude the one more or more first time slots in which the control information is received.

The first and second frequency resources may be in a frequency range of 6425 to 7125MHz.

The second frequency resource may be provided in the lower part of the frequency range of 6425 to 7125MHz and the first frequency resource is provided in the upper part of the frequency range of 6425 to 7125MHz.

The second frequency resource may be below 6585MHz, and the first frequency resource may be above 6585MHz.

The first frequency resource may be associated with a first network operator and the second frequency resource may be shared by the first network operator and one or more other network operators.

The method may comprise receiving control information in one or more of the first time slots, the one or more first time slots used for receiving control information being different to the third time slots.

One or more fourth time slots on the second frequency resource may be reserved for transmissions by one or more devices using an unlicensed technology.

The unlicensed technology may comprise Wi-Fi.

Remaining ones of the slots of the second frequency resource may provide the third time slots and may be reserved for uplink transmissions by one or user equpment using a licensed technology.

The one or more fourth time slots may be one or more of: the same as one or more of the second time slots; or the same as one or more first time slots in which control information is received.

The guard band may be in the region of60 MHz with an operating frequency in the region of 6000MHz. The operating frequency may be as previously discussed.

The method may comprise transmitting in accord with licensed communication requirements when transmitting in one or more of the third time slots.

The method may comprise transmitting in accord with license exempt communication requirements when transmitting in one or more fourth time slots on the second frequency resources, said third and fourth time slots being different.

The method may comprise adjusting a transmission in accord with license exempt communication requirements based on a configuration associated with the second frequency configuration or based on activity.

The second frequency configuration may indicate the one or more fourth time slots to be used for license exempt communication.

The activity may relate to which one or more third time slots have been scheduled and which are not to be used license exempt communication.

Other aspects and features may be seen from the claims.

According to a further aspect, there is provided a computer program comprising instructions, which when executed by an apparatus, cause the apparatus to perform any of the methods set out previously.

According to a further aspect, there is provided a computer program comprising instructions, which when executed cause any of the methods set out previously to be performed.

According to an aspect there is provided a computer program comprising computer executable code which when cause any of the methods set out previously to be performed.

According to an aspect, there is provided a computer readable medium comprising program instructions stored thereon for performing at least one of the above methods.

According to an aspect, there is provided a non-transitory computer readable medium comprising program instructions which when executed by an apparatus, cause the apparatus to perform any of the methods set out herein.

According to an aspect, there is provided a non-transitory computer readable medium comprising program instructions which when executed cause any of the methods set out previously to be performed.

According to an aspect, there is provided a non-volatile tangible memory medium comprising program instructions stored thereon for performing at least one of the above methods.

In the above, many different aspects have been described. It should be appreciated that further aspects may be provided by the combination of any two or more of the aspects described herein.

Various other aspects are also described in the detailed description and in the claims.

### BRIEF DESCRIPTION OF THE FIGURES

Some example embodiments will now be described, by way of non-limiting and illustrative example only, with reference to the accompanying Figures (Fig.) in which:
Fig. 1 shows a comparison between a time-division duplex TDD arrangement (on the left) and a SBFD (sub-band full duplex) arrangement (on the right);
Fig. 2 shows a modified SBFD arrangement of some embodiments;
Fig 3 shows an example where the SBFD arrangement of Fig. 2 is used in an upper 6 GHz band;
Fig 4 shows a modified SBFD arrangement of some embodiments supporting licensed and unlicensed technologies:
   Fig. 5 shows a representation of downlink, uplink, and SBFD slots;
   Fig. 6 shows a representation of a network system according to some example embodiments;
   Fig. 7 shows a simplistic representation of a base station according to some example embodiments;
   Fig. 8 shows a representation of user equipment according to some example embodiments;
   Fig. 9 shows a first simplified example of a part of a base station for the transmitting and receiving of signals;
   Fig. 10 shows a second simplified example of a part of a base station for the transmitting and receiving of signals;
   Fig. 11 shows a third simplified example of a part of a base station for the transmitting and receiving of signals;
   Fig. 12 shows a fourth simplified example of a part of a base station for the transmitting and receiving of signals;
   Fig. 13 shows a fifth simplified example of a part of a base station for the transmitting and receiving of signals;
   Fig. 14 shows a sixth simplified example of a part of a base station for the transmitting and receiving of signals;
   Fig. 15 shows an example of a part of a user equipment for the transmitting and receiving of signals:
      Fig.16 shows a first method of some embodiments; and
      Fig.17 shows a second method of some embodiments.

### DETAILED DESCRIPTION

The following generally relates to signalling between a network node and a user equipment using a SBFD type arrangement. In the following, the network node is referred to a base station. However, it should be appreciated that other embodiments may be used with any other suitable access node.

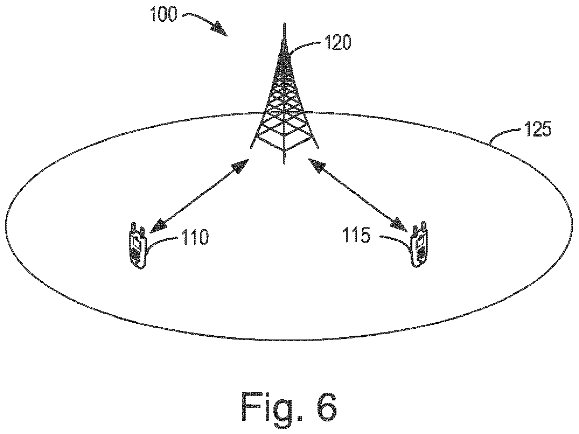

In the following certain embodiments are explained with reference to mobile communication devices capable of communication via a wireless cellular system and mobile communication systems serving such mobile communication devices. Before explaining in detail the exemplifying embodiments, certain general principles of a wireless communication system, access systems thereof, and mobile communication devices are briefly explained with reference to Figs 6, 7 and 8 to assist in understanding the technology underlying the described examples.

Fig. 6 illustrates an example communication environment 100 in which example embodiments of the present disclosure may be implemented.

In the communication environment 100, a plurality of user equipment 110 and 115 and a base station 120 can communicate with each other. The base station 120 may serve a coverage area, called a cell 125. The user equipment may have access to a communication network via the base station 120. In some example embodiments, both the user equipment and the base station 120 may be configured to implement a beamforming technique and communicate with each other via a plurality of beams.

The term "user equipment" refers to any end device that may be capable of wireless communication. By way of example rather than limitation, a user equipment may also be referred to as a communication device, a terminal device, a Subscriber Station (SS), a Portable Subscriber Station, a mobile device, a Mobile Station (MS), or an Access Terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), a machine-type communications (MTC) device, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. The terminal device may also correspond to a Mobile Termination (MT) part of an IAB node (e.g., a relay node). In the following description, the terms "terminal device", "communication device", "terminal", "user device", "user equipment" and "UE" may be used interchangeably.

As used herein, the term "base station" refers to a network node in a communication network via which a UE accesses the network and receives services therefrom. The network node may be an access point. The base station may be a node B (NodeB or NB), an evolved NodeB (eNodeB or eNB), an NR NB (also referred to as a gNB), a Remote Radio Unit (RRU), a radio header (RH), a remote radio head (RRH), a relay, an Integrated Access and Backhaul (IAB) node, a low power node such as a femto, a pico, a non-terrestrial network (NTN) or non-ground network device such as a satellite network device, a low earth orbit (LEO) satellite and a geosynchronous earth orbit (GEO) satellite, an aircraft network device, and so forth, depending on the applied terminology and technology.

In some example embodiments, a radio access network (RAN) split architecture comprises a Centralized Unit (CU), one or more Distributed Unit (DU) and one or more Radio Units. One CU may serve a plurality of DUs. A DU may serve a plurality of radio units (RU). A RU may comprise the physical layer, and a RF (radio frequency) front end. The DU may make scheduling decisions.

In some example embodiments, a link from the base station 120 to the user equipment is referred to as a DL, while a link from the user equipment to the base station 120 is referred to as a UL. In DL, the base station 120 is a Tx device (or a transmitter), and the user equipment is a Rx device (or a receiver). In UL, the user equipment is a Tx device (or a transmitter), and the user equipment 120 is a Rx device (or a receiver).

Communications in the communication environment 100 may be implemented according to any proper communication protocol(s), comprising, but not limited to, cellular communication protocols of the first generation (1G), the second generation (2G), the third generation (3G), the fourth generation (4G), the fifth generation (5G), the sixth generation (6G), and the like, and/or any other protocols currently known or to be developed in the future. Moreover, the communication may utilize any proper wireless communication technology, comprising but not limited to: Code Division Multiple Access (CDMA), Frequency Division Multiple Access (FDMA), Time Division Multiple Access (TDMA), Frequency Division Duplex (FDD), Time Division Duplex (TDD), Multiple-Input Multiple-Output (MIMO), Orthogonal Frequency Division Multiple (OFDM), Discrete Fourier Transform spread OFDM (DFT-s-OFDM) and/or any other technologies currently known or to be developed in the future. These technologies may be referred to a "licensed technologies".

Licensed technologies are ones where a network operator is licensed by a regulator to use a specific portion(s) of a licensed spectrum. In contrast, an unlicensed technology (or license exempt technology) use parts of the spectrum which are available to the public and are generally free. In other words, anyone can use an unlicensed part of the spectrum. An example of an unlicensed technology is Wi-Fi.

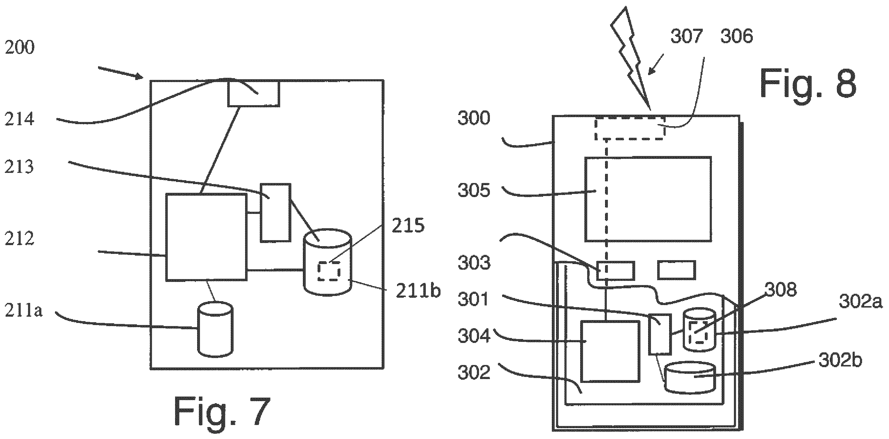

Fig. 7 illustrates an example of at least a part 200 of the base station. The part 200 may have at least one processor and at least one memory storing instructions of the base station that, when executed by at least one of the at least one processor cause operations or actions of the base station to be performed. The at least a part of the base station may be a base station or part of the base station such as a DU in an architecture where a base station function is provided by CU, DU and RU architecture. The scheduling may be controlled by the DU.

The base station may comprise at least one random access memory (RAM) 211a, at least one read only memory (ROM) 211b, at least one processor 212, 213 and an input/output interface 214. The at least one processor 212, 213 may be coupled to the RAM 211a and the ROM 211b. The at least one processor 212, 213 may be configured to execute an appropriate software code 215. The software code 215 may include software code that allows, enables, or otherwise facilitates the apparatus to perform one or more operations of the base station.

The software code 215 may be stored in the ROM 211b.

Fig. 8 illustrates an example of a user equipment 300, such as the user equipment 110, 115 illustrated in Fig. 6. The user equipment 300 may be provided by any device capable of sending and receiving radio signals, such as the user equipment described herein. The user equipment 300 may provide, for example, communication of data for carrying communications. The communications may be one or more of voice, electronic mail (email), text message, multimedia, data, machine data and so on.

The user equipment 300 may receive signals over an air or radio interface 307 via appropriate apparatus for receiving and may transmit signals via appropriate apparatus for transmitting radio signals. In Fig. 8 transceiver apparatus is designated schematically by block 306. The transceiver apparatus 306 may be provided for example by means of a radio part and associated antenna arrangement. The antenna arrangement may be arranged internally or externally to the mobile device.

The user equipment 300 may be provided with at least one processor 301, at least one memory, for example at least one ROM 302a and at least one RAM 302b, and other possible components 303 for use in software and hardware aided execution of tasks it is designed to perform, including control of access to and communications with access systems (such as a network access system provided by the base station described above in relation to Figs 6 and 7. The at least one processor 301 is coupled to the RAM 302b and the ROM 302a. The at least one processor 301 may be configured to execute an appropriate software code 308. The software code 308 may for example allow the apparatus to perform or control one or more of the present aspects. The software code 308 may be stored in the ROM 302a.

The processor, storage and other relevant control apparatus can be provided on an appropriate circuit board and/or in chipsets. This feature is denoted by reference 304. The device may optionally have a user interface such as a keypad 305, touch sensitive screen or pad, combinations thereof or the like. Optionally one or more of a display, a speaker and a microphone may be provided depending on the type of the device.

In some exemplary embodiments, the user equipment 300 may be an apparatus comprising at least one processor and at least one memory storing instructions that, when executed by the at least one processor, cause a user equipment 110, 115 to perform examples or embodiments described in this document.

Some example embodiments relate to a sub-band arrangement for sub-band full duplex (SBFD).

SBDF is a duplex mode. In SBDF, a TDD (time division duplex) carrier is split into sub-bands. This may enable simultaneous transmission and reception in a same time slot.

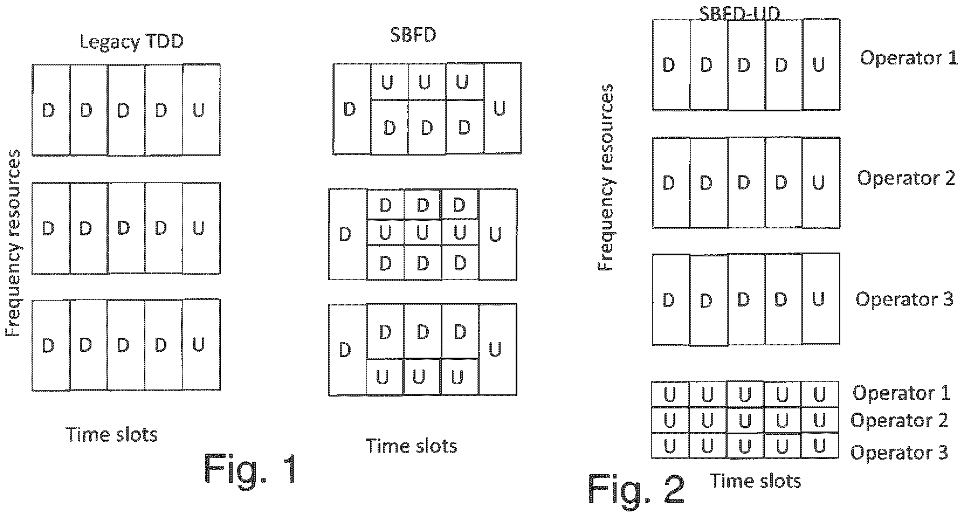

Fig.1 shows a comparison between a time-division duplex TDD arrangement (on the left) and a SBFD arrangement (on the right). In this example, there are three operators on adjacent carriers. By way of example there may be a bandwidth of 100 MHz per carrier.

With the TDD operation shown on the left, the operators synchronize the downlink (DL) and uplink (UL) transmit slots to avoid cross-link interference (CLI). The CLI may be DL-to-UL BS (base station)-to-BS and UL-to-DL UE (user equipment)-to-UE interference. If simultaneous base station DL and UL transmissions were permitted, a BS DL transmission may interfere with a co-located BS UL receiver. This may be due to nonlinearities in the RF (radio frequency) transceivers. The nonlinearities may result in adjacent channel leakage and/or limited adjacent channel selectivity.

Similarly, for UEs, a UE transmitting in UL may interfere with a nearby UE receiving in DL.

Adjacent channel leakage are unwanted emissions, present in all radio transmitters. Adjacent channel selectivity is the ability of a receiver to receive a weak wanted signal with a strong unwanted signal on the adjacent channel.

With the example SBFD configuration shown on the right, DL resources may be converted into UL resources. To maximize the guard band between DL and UL frequency resources of adjacent operators, the UL sub-band may be placed on the opposite edge from the adjacent operator, or in the middle of the carrier for any operator with spectrum allocation in the middle. This may provide some improvement of the adjacent channel interference performance at the base station,

A flexible duplex slot (known as sub band full duplex (SBFD) slot) may comprises resources for both uplink and downlink transmission opportunities within the same time slot. Stated differently, SBFD slots implement frequency division duplex communication within a single carrier bandwidth in which transmissions in uplink and downlink simultaneously occur within different sub-bands of the carrier bandwidth.

Time slots that comprise an SBFD slot format comprise a mixture of uplink and downlink resources (e.g., time-frequency resources that may be used for transmission and/or reception, depending on whether the resource is for uplink or downlink).

There are a range of different types of SBFD slots that reflect different makeups of uplink and downlink transmission opportunities. For example, an SBFD slot may comprise a mixture of uplink and downlink transmission opportunities. Further, where there is a mixture of uplink and downlink transmission opportunities, an SBFD slot may comprise uplink resources near a central frequency portion of the slot (e.g., sandwiched between downlink resources for downlink transmission resources), or at an extreme of the range of frequencies of the slot (e.g., at the lowest frequency of the slot, or at the highest frequency of the slot). In both cases, the uplink resources may be separated from the downlink resources by a guard band. A guard band may be considered as being a narrow range of frequencies that separates two ranges of wider frequency (e.g., carrier frequencies respectively associated with uplink and downlink resources) that is unused for transmission opportunities in either uplink or downlink directions.

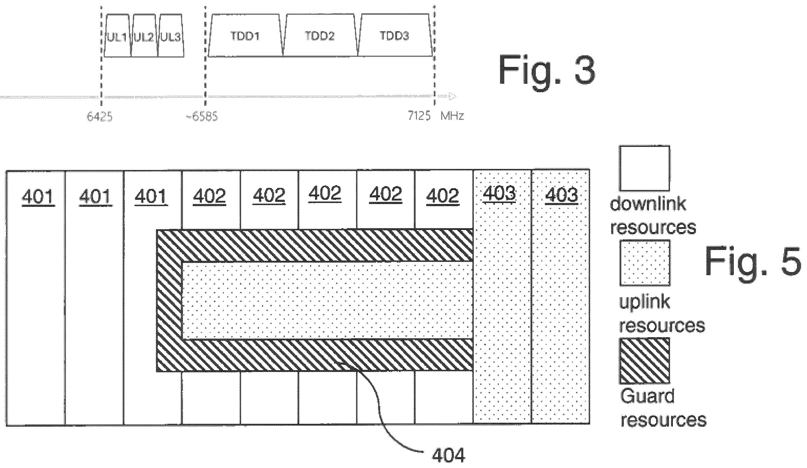

A flexible duplexing frame structure that includes SBFD slots such as shown in Fig. 1, is illustrated with respect to Fig. 5.

Fig. 5 illustrates an example of an enhanced radio frame configuration that comprises three DL slots 401 followed by five SBFD slots 402, and two UL slots 403. Each SBFD slot in Fig. 5 is illustrated as comprising resources (e.g., time-frequency resources) for DL transmission, guard band (e.g., unused resources that may denote a boundary between uplink and downlink transmissions, represented in Fig. 5 as gaps 404 between UL and DL resources), and UL resources in the middle.

Each slot in Fig. 5 illustrates a time duration considered to comprise concurrent transmissions. For example, each of the SBFD slots comprise both UL and DL transmission opportunities on respective frequency carriers that are performed simultaneously. The SBFD slot formats with concurrent DL and UL transmission opportunities are occasionally labelled "X-slots".

As SBFD slots comprise contemporaneous UL and DL transmission opportunities, cross link interference may arise. For example, the cross link interference may arise as a result of intra-network node transmissions (e.g., as a result of DL transmissions made by a network node on UL transmissions to be received by that network node), and/or as a result of inter-network node transmissions (e.g., as a result of DL transmissions made by a network node on UL transmissions to be received by another network node).

The SBFD operation, i.e. full duplex with DL resources transmitted simultaneously by a BS as receiving on non-overlapping UL resources on the same carrier may require self-interference suppression. There may also be adjacent channel interference coming from co-located BSs that are transmitting in DL.

To facilitate the use of SBFD may require RF filtering, that isolates the UL and DL sub-bands sufficiently to address the self-interference issue. However, this may be a challenge with macro base stations.

An example magnitude of self-interference suppression is as follows. An example macro-BS conducted transmit power may be of the order of 55 dBm/100MHz. An example macro-BS receiver noise figure may be better than 4 dB, leading to a thermal noise level of -97 dBm/20MHz referring to the antenna connector. If 20 MHz of DL resources are converted to UL, a remaining transmit power is 54 dBm (over an 80 MHz bandwidth). To keep receiver desensitization at for example a maximum of 1 dB, the leakage power from DL to UL may be 6 dB below noise floor i.e. at -103 dBm/20MHz. This gives a total interference suppression of 157 dB. Since the sub-band configuration is non-overlapping, 45 dB of adjacent channel leakage ratio (ACLR) may be assumed; 80 MHz to 20 MHz bandwidth scaling improves the ACLR by a further 6 dB. 106 dB remain to be cancelled or suppressed. This may be challenging to achieve in practice even without taking into account a need to also provide adjacent channel interference.

Reference is made to Fig.2 which shows a modified SBFD arrangement of some example embodiments. This modified SBFD arrangement is referred to SBFD-UD ("SBFD - uplink - downlink") in this document.

Some example embodiments may be used in a so-called "upper 6 GHz" frequency band. The upper 6GHz frequency band may be 6425 to 7125 MHz. However, it should be appreciated that the in some countries, the upper 6GHz frequency band may cover a different frequency band to the given example. It should be appreciated that although various examples are described with reference to the so-called upper 6 GHz frequency band, other examples may use a different frequency range. The different frequency range may or may not comprise at least a part of the frequency band between 6000 and 7000MHz.

The upper 6GHz frequency band may be used by one technology. For example the frequency band may be used mobile (licensed) technologies.

In other example embodiments, the upper 6GHz frequency band may be or may not be shared by different technologies. By way of example only, the upper 6GHz frequency band may be in some example embodiments be shared by mobile technologies and unlicensed (license exempt) technologies.

For example, the mobile technology may be IMT (international mobile technologies). By way of example only the mobile technology may be a 3GPP cellular technology, for example cellular 4G/5G/6G and/or beyond.

The license exempt technologies may be Wireless Access Systems including Radio Local Area Networks (WAS/RLAN), such as Wi-Fi technologies or NR-U (5G New Radio Unlicensed). In this disclosure the term unlicenced is used interchangeably with the term license exempt.

Some example embodiments may thus relate to the sharing of the upper 6GHz frequency band by a two or more different technologies. In the example discussed, the two technologies are 3GPP cellular technology and Wi-Fi. However, it should be appreciated that this is by way of example only. In other embodiments, one or more different technologies may alternatively or additionally be used.

In the example shown in Fig.2, there are three operators. The operators may be physical operators having radio hardware at a base station site. The number of operators may be the same as the number of operators operating in a country.

The sub-bands for uplink and TDD carriers are separated by a guard band. The guard band is dimensioned based on base station implementation feasibility. The guard band may depends on device output power level The guard band may be in the . region of 60 MHz, for example between 40 and 80MHz. The guard band may be between 45 and 75MHx. The guard band may be between 50 and 70MHz. The guard band may be between 55 and 65MHz. The operating frequency in the region of 6000MHz. The operating frequency may be as previously discussed. For example the operating frequency may be the upper 6MHz band.

Each operator is provided with its own frequency resource with dedicated downlink slots and dedicated uplink slots. This is provided by a part which is referred to a TDD part. In some examples, there may be sharing by one or more operators of a given TDD band.

A further frequency resource is allocated for uplink resources and can be split between each of the three operators. In some embodiments, the frequency resource is divided into three frequency ranges with each frequency range being allocated to a respective operator. This further frequency resource is separated from the closest dedicated operator frequency resource by a guard band large enough to avoid significant interference issues. This part is referred to as an UL part.

In some examples, the frequency bandwidth of the TDD part is the same as the frequency bandwidth of the UL part. In other examples, the frequency bandwidth of the TDD part is different to the frequency bandwidth of the UL part.

The SBFD-UD configuration provided by some embodiments may make use of RF sub-band filtering at the base station. Self-interference and/or co-located adjacent channel interference may suppressed by the RF sub-band filter. There may be no restrictions on deployment and/or transmit power levels when SBFD-UD is used.

It should be noted that in this example, there are three network operators in a given coverage area. However, this is by way of example only and in other embodiments, there may be more or less than three network operators. In some embodiment, embodiments, the frequency resources may be allocated to one network operator.

It should be noted that in this example, one set of dedicated frequency resources (TDD part) are allocated to each operator. It should be noted that this is by way of example only. More than one set of dedicated frequency resources (TDD part) may be allocated to an operator.

In this example, there is one set of shared frequency resources. It should be noted that this is by way of example only. More than one set of UL frequency resources may be provided. Different operators may share different ones of the UL frequency resources or have dedicated UL resources.

The frequency resources may be shared in the sense that the frequency resource is split up into different bands and a given band is allocated to a particular operator. In other examples, a different scheme may be implemented to allocate resource to the uplink communications.

In some example embodiments, the one or more TDD parts are provided in one part of the spectrum and one or more UL parts are provided in a different part of the spectrum.

Where there is only one operator, then the shared resources may be used by that one operator.

It should be noted that in this example, there are four sets of frequency resources. This is by way of example only and in some embodiments, there may be more or less than four sets of frequency resources.

In some embodiments, a same arrangement may be used by a UE.

However, in other embodiments, assuming UE is fully duplex capable, then the separate SBFD-UL allocation can be a minimum UL allocation.

Additional UL capacity can be obtained statically or dynamically from the TDD part with the DL and UL slots. This may be provided by dynamic TDD, i.e. adjusting the TDD pattern in runtime. This may require interference management/co-ordination between the operators sharing the band and/or different sites of same operator. For example, all operators may agree in runtime to change the pattern in a particular area to be more UL dominated. This may be because all operators traffic has become more UL dominated.

However, in some embodiments, if the UE supports sending in a SBFD-UL part (only when it is not active in TDD part, then scheduler may use the SBFD-UL part as additional capacity depending on UE activity in TDD part.

It should be noted that the approach shown in Fig.2 differs from current 3GPP duplex arrangements. In particular, the duplex gap may be set in accordance with the BS filtering capabilities rather than that of the UE.

It should be noted that the approach shown in Fig.2 differs from the SBFD approach shown in Fig.1 in that the UL transmissions that are in DL timeslots are at one edge of the spectrum instead of in the middle.

The UL transmissions in the UL part are separated from the DL transmissions in the TDD part by a guard band. The guard band may be set according to the BS filtering capabilities.

Reference is made to Fig.3, which shows an example where the SBFD-UD arrangement of some embodiments is used in the upper 6 GHz band. In this example, TDD1, TDD2 and TDD3 are the TDD frequency resources allocated to the first, second and third operators respectively. UL1, UL2 and UL3 correspond to the shared uplink frequency resource (the UL part) where UL1 is the part of the uplink frequency resource, which is allocated to the first operator, UL2 is the part of the uplink frequency resource which is allocated to the second operator and UL3 is the part of the uplink frequency resource which is allocated to the third operator.

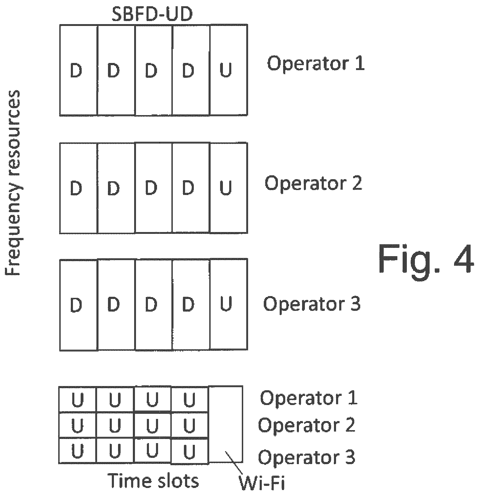

As illustrated in Fig.4, one or more of the time slots of the shared uplink frequency resource can be used for unlicensed communications such as Wi-Fi.

In some examples, specific time slots may be reserved for unlicensed communications. In some example embodiments, a time slot which is reserved for Wi-Fi would be one which would be unused by a UE for licensed communications. As far as a Wi-Fi device is concerned, that Wi-Fi device may not be aware that the time slot is reserved. Rather the Wi-Fi device would use a listen before talk (LBT) mechanism to help that Wi-Fi device to transmit in slots that are not used by nearby UL transmitters. The slots which are reserved for Wi-Fi would then be available for Wi-Fi communication without contention.

In some embodiments, slots may not be specifically reserved for Wi-Fi and a Wi-Fi device is able to use any of the time slots in the UL part.

In other embodiments, slots may be shared by Wi-Fi and licensed communications. In such a case, a shared slot may be provided with a lower usage or loading for licensed communications as compared to a slot in the UL frequency range which is not share with license exempt communications.

In this example the timeslot which is reserved for the Wi-Fi communication is the same as the time slot in the TDD1, TDD2 and TDD3 frequency ranges which are allocated for uplink communications. However, in other examples, the any other suitable time slot or time slots in the UL part may be reserved for Wi-Fi .

In another example, one or more different timeslots may be allocated for Wi-Fi. For example, a given time slot (or time slots) of a TDD frame may be used to transmit control information to one or more UEs. In some embodiments, this time slot may be reserved on the UL part for Wi-Fi.

In another example, a given time slot (or time slots) of a TDD frame may be used to transmit control information to one or more UEs and the corresponding time slot is the UL part is unused at least by the UEs.

In some embodiments, there may be a delay between a downlink time slot which comprises control information for a UE and a related UL transmission by the UE. The control information may comprise downlink control information. The UL transmission may be a PUSCH (physical uplink control channel) slot.

The given time slot (or time slots) of a TDD frame used to transmit control information to one or more UEs may be a first time slot of a frame or any other suitable time slot.

Thus, in some embodiments, the unlicensed operation (for example Wi-Fi), and the SBFD UL frequency sub-band share the same frequencies. The SBFD UL communications by UE may not cause significant interference to Wi-Fi in the same area, and vice versa.

If a network side transmits control information in a first time slot in the TDD frequency range for a first UE, that triggers reception in future time slots from that first UE in the UL frequency range. If the first UE is a half-duplex UE, that UE will not be able to receive in the time slots in the TDD frequency range in the time slots in which that UE is transmitting. Hence, the network would be able to schedule a different instead. This may help Wi-Fi to reuse the UL frequency range in geographical area of the first UE because constant usage of first frequency range by the first UE is not possible.

In some embodiments, the SBFD-UL allocation does not require for example, a listen before talk before UE sends the UL. This may keep usage and latency predictable.

If some capacity is to be guaranteed for unlicensed (Wi-Fi) technology, then those slots can be left unused by the UE for mobile communications. For example, the TDD UL slots may also be left unused by UEs for mobile communication and instead may be reserved for Wi-Fi communication.

If the TDD UL slots are left unused, this should not impact a given UE capabilities. In some embodiments, preventing simultaneous UL transmission by a UE for mobile communications in both the TDD UL slot and the SBFD-UL slot reserved for unlicensed communications may be simple to manage as the occupied and instantaneous bandwidth decreases. This would allow time domain sharing of the same gNB resources between SBFD-UL and TDD UL. The unlicensed (Wi-Fi) technology may use all SBFD-UL sub-band slots, but Wi-Fi would observe no IMT interference during the TDD-UL symbols.

The arrangement as discussed in relation to Figs 3 and 4 may provide two different systems, for example a 3GPP or licensed system, and an unlicensed system, which operate with partial spectrum sharing (i.e. each system operating in both a dedicated portion of spectrum and a mutually shared portion of spectrum). One system may use transmission resource scheduling (e.g. the licensed system) and the other system may use opportunistic listen-before-talk (LBT) and transmission in unscheduled resources (i.e. unlicensed),

The licensed system may operate in spectrum divided into two portions in the frequency domain, the first portion being used for TDD operation, and the second portion being used only for uplink transmission. The guard band may be as previously discussed.

The unlicensed system may operate in the second portion of the spectrum of the licensed system for uplink transmissions with LBT but in one or more different time slots to the licensed system. The unlicensed system may use its part of the spectrum for both uplink and downlink transmissions with LBT.

The allocation of the TDD part and the UL part within the upper 6GHz spectrum may depend on other systems (e.g. Wi-Fi) using the ULL part and/or which system in using an adjacent band.

In some embodiments, sharing of the UL part with a UE transmitting on the UL may result in a lower interference to, for example a Wi-Fi device, as compared to if a base station were instead to transmit in the UL part. This is because a UE transmit power is lower than a base station transmit power, which causes less interference.

Some embodiments separate the TDD parts from the UL part which used by Wi-Fi. This
means that Wi-Fi communications are not in the same part of the spectrum as the TDD part. This is because the DL transmit power of the base station is high and may be impact the performance of the Wi-Fi device.

It is possible that a single UE might support operation in both licensed and unlicensed systems. A given UE may operate in one system or other system in the shared spectrum range.

Some embodiments may support hybrid sharing of upper 6 GHz band between licensed and unlicensed use.

Some embodiments may enable spectrum sharing between licensed and unlicensed systems while enabling the licensed systems to operate with full power macro-BSs (for example allowing network operators to reuse their existing site grids).

Some embodiments may avoid unmanageable interference between the licensed and unlicensed systems.

In a practical macro-BS implementation, SBFD in the existing 3GPP configuration would end up using large part of the spectrum for guard bands between the UL and DL transmissions in a given time slots. In the proposed SBFD-UD configuration the spectrum is used much more efficiently by providing a single guard band between the shared frequency resource and the closest dedicated TDD frequency resource.

In some embodiments, downlink beamforming in SBFD-UD may be based on UL receiver measurements during the TDD UL time slots (i.e. Sounding Reference Signal (SRS) transmitted by the UE, uplink data channels transmitted by the UE) and channel reciprocity.

In some example embodiments, UEs do not have to implement a duplex filter in SBFD-UD. In SBFD-UD, the UEs may be half-duplex UEs, meaning that UEs can either transmit or receive, but not simultaneously. In other examples, a UE may be capable of full duplex operation, meaning that the UE can receive on the TDD DL and transmit on the SBFD UL during the same time slots.

It should be noted that the unlicensed band at 5945-6425 MHz may be extended until e.g. 6585 MHz or other suitable value, and that the IMT allocation would be above that. This split is by way of example and different embodiments may have a different split.

In some example embodiments, the 5945-6425 MHz band may already be available for unlicensed use. This band may be extended by using the UL part. In some examples, the UL part may be 160MHz, in line with the current requirements for Wi-Fi.

In some examples, the split may depend on the number of TDD bands required, the size of each TDD band and a size of any guard band between the TDD bands. By way of example only, a TDD band may be 200MHz. In some examples, the split may depend on the required size of the guard band between the UL part and the TDD part. In some examples, the split may depend on the size of the UL part and any guard band required between the UL part and adjacent spectrum.

In the example of Fig.3, the TDD sub-bands are provided in the part of the band for the IMT spectrum allocation. This may enable robustness and quality of service according to the well-established 3GPP performance metrics, as the TDD carriers can be operated standalone. The TDD carriers can operate interference-free from unlicensed use in the same geographical area, with UEs able to monitor downlink control channels (e.g. for radio resource management and scheduling grants) and transmit uplink control and data.

In the example of Fig.3, the SBFD UL sub-band is provide in the extended unlicensed allocation above 6425 MHz. An operator would have a possibility to extend their TDD carrier with the SBFD UL carrier. The SBFD capable UEs may get the scheduling information from the TDD carrier, and transmit either on the TDD UL slots, or the SBFD UL slots depending on the scheduling approach.

The UL signals for a UE may be less problematic for Wi-Fi, for example than a higher power macro base station downlink signal. From IMT point of view, the UEs may be scheduled irrespective of potential Wi-Fi operation on the overlapping frequencies. Wi-Fi is designed to operate on an unreliable medium and has mechanisms to cope with sporadic interference. IMT UEs and Wi-Fi transmit power may be similar (23 dBm) and so there is no imbalance.

Thus, the coexistence of Wi-Fi and SBFD UL on the same spectrum can be provided in some embodiments. The downlink control information including scheduling grants for UEs may come on the TDD carrier, making the transmissions robust. The UEs are able to transmit on the SBFD UL sub-band regardless of unlicensed activity on the same frequency. As the TDD carrier (i.e. downlink) is not shared with unlicensed device, this means that there is no impact on the quality of the downlink control channel reception and therefore on the reliability of the whole system.

The UE uplink transmit power limit for handheld devices may be 23 dBm for bands below 7 GHz. The same limit may apply for unlicensed devices. Hence, Wi-Fi will not have to deal with high power interferers. Wi-Fi has polite protocol mechanisms (e.g. listen before talk) to avoid transmitting on top of an uplink UE if at the same location, and even in case of concurrent transmissions, the Wi-Fi transmit bandwidths are currently 80 MHz (20/40/80/160/320 MHz channels are available), making the power spectral density much lower than a relatively narrowband UL transmission (e.g. 4 resource blocks = 1.28 MHz). The interference power spectral density at the BS receiver would likely be low compared to the uplink signal power.

In some example embodiments, the base station may be a macro base station. A macro base station may serve a cell having a size of which extends from the base station in the range of around 200 to 350m. The macro base station may have a transmit power in the upper 6GHz range of the order of 50dBm (this is conducted power at the antenna connectors). By way of example, a transmit power may be 52-55 dBm. In some example embodiments, a base station using a transmit power of over 50dBm may require an interference suppression when there is transmission of DL signals in the TDD part and receiving of UL signals in the UL part, in a same time slot which is much lower than the 106dB discussed in relation to Fig. 1.

By way of example, the base station may transmit with a transmit power in the region of 50dBm and provide an interference suppression of up to 100dB when the base station transmits and receives in a same time slot of the of the TDD and UL parts.

By way of example, the base station may transmit with a transmit power in the region of 50dBm and provide an interference suppression to avoid receiver saturation in one or more third time slots when the base station transmits and receives in a same time slot of the of the TDD and UL parts.

By way of example, the base station may transmit with a transmit power in the region of 50dBm or higher in the TDD band. The base station may have an interference suppression in the region of 146dB (or similar) or higher on the second frequency resource when the base station transmits and receives in a same time slot of the TDD and UL parts. This may provide an interference power of -96dBm which is a similar level to floor noise.

By way of example, the base station may transmit with a transmit power in the region of 55dBm or higher in the TDD band. The base station may have an interference suppression in the region of 161dB (or similar) or higher on the second frequency resource when the base station transmits and receives in a same time slot of the TDD and UL parts.

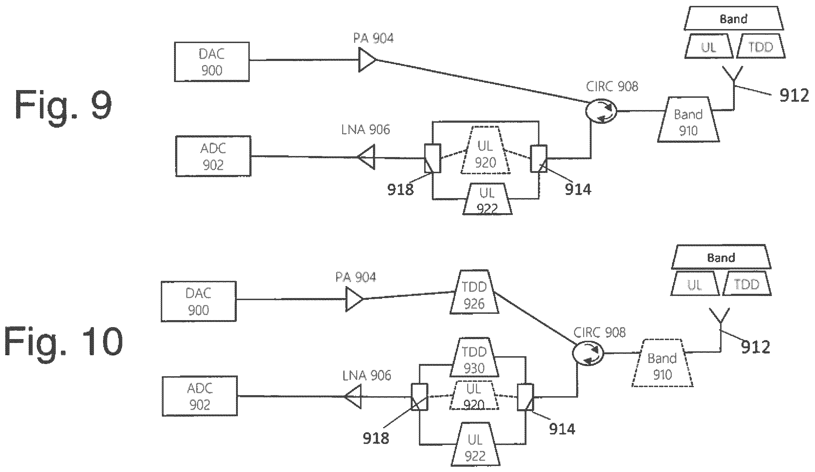

Reference is made to Fig.9 which shows a first simplified example of a part of a base station for the transmitting and receiving of signals. Fig.9 shows a transceiver arrangement. The transceiver arrangement may be provided in a base station such as a macro base station or in a RU of a base station arrangement.

On the transmit side: A digital to analogue converter DAC 900 will receive a digital signal which is to be transmitted and convert that signal to an analogue signal. The analogue signal is amplified by a power amplifier PA 904. The amplified output is provided to a circulator 908 which directs the amplified output to a bandpass filter BPF 910. The BPF 910 is tuned to the entire bandwidth (referenced Band in the Fig.9) which comprises the TDD and UL parts. The output of the bandpass filter 910 is provided to the antenna array 912 for transmission. This is the DL transmission. It should be noted that at some point along the transmission path, the signal will be upconverted from the base band frequency to the radio frequency.

On the receive side: The antenna array 912 will receive an uplink signal from one or more user equipment. This is referenced UL. The received signal is directed to the circulator 908 via the BPF 910. The circulator 908 will direct the received uplink signal to a first switch arrangement 914. This will direct the received signal to a second BPF 920 or a third BPF 922. The second BPF 920 may be tuned to the UL frequency range of the UL part and the third BPF is also tuned to the uplink frequency range. of the UL part The uplink frequency range may comprise the UL frequency bands.

One of the second and third BPFs may be tuned to the part of the UL frequency allocated to the respective operator associated with the transceiver arrangement. The other of the second and third BPFs may, in some examples, be tuned to the full range of the UL frequency part (e.g. covering the frequency range associated with the three operators). Alternatively, the other of the second and third BPFs may, in some examples, be tuned to the frequency range of the UL part associated with the other two operators (i.e. not the respective operator).

In another example, a separate bandpass filter may be provided, in parallel with each other, one for each of the frequency bands associated with UL part. For example, one bandpass filter could be provided tuned to the part of the UL frequency assigned to a particular operator.

A second switch arrangement connect the output of the used BPF to a low noise amplifier LNA 906. The LNA 906 amplifies the signal and passes that signal (which is an analogue signal) to an analogue to digital converter ADC 902. The output of the of the LNA 906 is converted to a digital signal by the ADC 902. It should be noted that at some point along the reception path, the signal will be down converted from the radio frequency to the base band frequency.

It should be noted that with the arrangement of Fig.9 a DL signal can be transmitted in the same time slot as an UL signal in the shared frequency range is received.

Reference is made to Fig.10 which shows a second simplified example of a part of a base station for the transmitting and receiving of signals. Fig.10 shows a transceiver arrangement. The transceiver arrangement may be provided in a base station such as a macro base station or in a RU of a base station arrangement.

The arrangement shown in Fig.10 differs from that shown in Fig.9 in that a fourth BPF filter 926 is provided between the PA 904 and the circulator 908. The fourth BPF 926 is tuned to the TDD frequency range. This may be the TDD frequency range of the operator associated with the base station. A fifth BPF filter 930 is provided between the first and second switch arrangements 914 and 918. The fifth BPF 930 is tuned to the TDD frequency range. This is for receiving the UL signals in the TDD part.

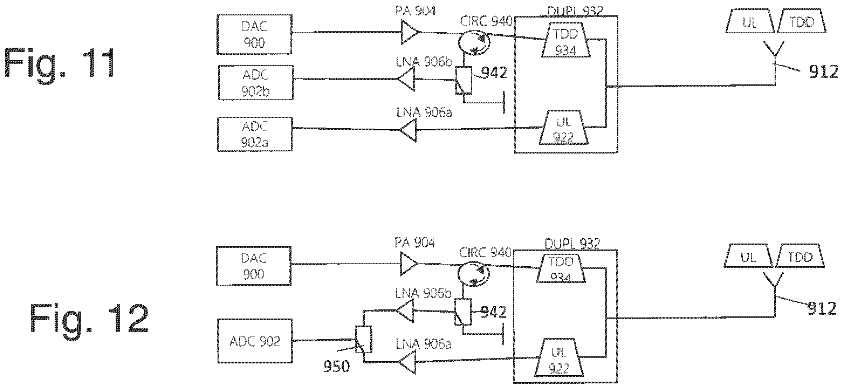

Reference is made to Fig.11 which shows a third simplified example of a part of a base station for the transmitting and receiving of signals. Fig.11 shows a transceiver arrangement. The transceiver arrangement may be provided in a base station such as a macro base station or in a RU of a base station arrangement.

The DAC 900, PA 904, and antenna array are as described in relation to Fig.9. However, in this example a duplexer 932 is provided. The duplexer 932 receives the signals which are to be transmitted from a circulator 940. The circulator is provided between the PA 904 and the duplexer 932. The duplexer 932 comprises a BPF 934 which is tuned to the TDD frequency range. The output of this BPF 934 is passed to the antenna array 912.

Received signals are directed from the antenna array to the duplexer 932. The received signals are directed to a BPF filter 922 tuned to the frequency of the shared uplink frequency and to the BPF 934 tuned to the TDD frequency range.

The output of the BPF 922 tuned to the frequency of the shared uplink frequency (the UL frequency part) is passed to a first LNA 906a, the output of which is passed to a first ADC 902a. The output of the BPF 934 tuned to the TDD frequency range is output to the circulator 940 which directs that received signal to a second LNA 906b via a switch 942. The output of the second LNA 906b is passed to a second ADC 902b.

Reference is made to Fig. 12 which shows a fourth simplified example of a part of a base station for the transmitting and receiving of signals. Fig.12 shows a transceiver arrangement. The transceiver arrangement may be provided in a base station such as a macro base station or in a RU of a base station arrangement.

The arrangement of Fig.12 differs from the arrangement of Fig.11 in that a switch 950 is provided between the outputs of the first and second LNA 906a and 906b and that a common ADC 902 is provided. The switch 950 is used to control which LNA is providing an output to the ADC 902 at a given point in time.

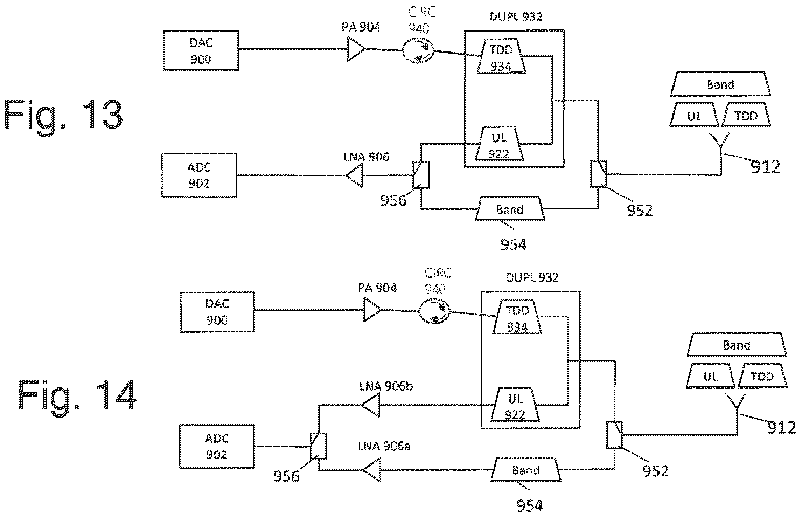

Reference is made to Fig. 13 which shows a fifth simplified example of a part of a base station for the transmitting and receiving of signals. Fig.13 shows a transceiver arrangement. The transceiver arrangement may be provided in a base station such as a macro base station or in a RU of a base station arrangement.

The DAC 900, PA 904, ADC 902, LNA 906 and antenna array are as described in relation to Fig.9.

In this example a duplexer 932 is provided. The duplexer 932 receives the signals which are to be transmitted from the PA 904. Optionally a circulator 940 is provided between the PA 904 and the duplexer. The duplexer 932 comprises a BPF 934 which is tuned to the TDD frequency range. The output of this BPF 934 is passed to the antenna array 912 via a switch 952. The switch 952 provides a path between the antenna array and the duplexer 932 or a path between the antenna array and a BPF 954 tuned to the frequency range of the full band (including the TDD and the UL parts).

Received signals are directed from the antenna array to the duplexer 932 via the switch 952 or the BPF 954. The received signals directed to the duplexer are directed to a BPF filter 922 tuned to the frequency of the uplink frequency part. The output of the BPF 922 tuned to the frequency of the uplink frequency part is passed to the LNA 906 via a second switch 954.

The output of the BPF 954 is passed to the LNA 906 via the second switch 954.

In some examples implemented in a split architecture, the scheduling may be handled by the DU.

In the example shown, the TDD parts and the UL parts are shown as being on separate frequency carriers which is the same for the time slots in a frame.

In another example, the frequency being used for the TDD part, and the UL part may change between a given number of time slots. In that case, the frequency used in a given time slot for a TDD transmission will be different to that used in the same time slot used for the UL part. In the case of a split architecture, the RRC (radio resource control) signalling to the UE may be controlled by the CU.

Reference is made to Fig. 14 which shows a sixth simplified example of a part of a base station for the transmitting and receiving of signals. Fig.14 shows a transceiver arrangement. The transceiver arrangement may be provided in a base station such as a macro base station or in a RU of a base station arrangement.

The arrangement of Fig.14 differs from Fig.13 in that the LNA 906 is replaced by a first LNA 906a between the output of the BPF 954 and the ADC 902 and a second LNA 906b between the output of the BPF 922 and the ADC 902. The switch 956 is now arranged to switch between the outputs of the first and second LNAs 906a and 906b.

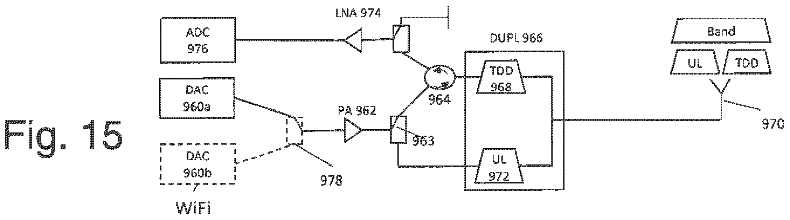

Reference is made to Fig. 15 which shows an example of parts of a user equipment for the transmitting and receiving of signals. Fig.15 shows a transceiver arrangement.

On the transmit side: A digital to analogue converter DAC 960a will receive a digital signal which is to be transmitted and convert that signal to an analogue signal. The analogue signal is amplified by a power amplifier PA 962. The amplified output is provided to a duplexer 966. The amplified output is provided either to: a bandpass filter 968, tuned to the TDD frequency band, of the duplexer 966 via a circulator 964; or to a bandpass filter 972 tuned to the UL frequency bands (the UL frequency part). A switch 963 controls to which bandpass filter the amplified signal is passed.

The outputs of the bandpass filters 972 and 968 are provided to an antenna array 970 for transmission.

In some embodiments, UE may be able to also operate as a license exempt device, for example as a Wi-Fi device. The Wi-Fi signals which are to be transmitted may be converted to the digital domain by the DAC 960a or optionally by a separate DAC 960b. The output of the DAC 960b, if provided may be directed to the PA 962 via a switch 978. The Wi-Fi signal is directed to the antenna array 970 via the band pass filter 972 tuned to the uplink frequency bands. It should be noted that at some point along the transmission path, the signal will be upconverted from the base band frequency to the radio frequency.

On the receive side: The antenna array 9970 will receive a downlink signal from one or more base stations. The received signal is directed to the bandpass filter 968 tuned to the TDD frequency range. The output of that bandpass filter 964 is output via the circulator 964 to a LNA 974. The LNA 974 amplifies the signal and passes that signal (which is an analogue signal) to an analogue to digital converter ADC 976. The output of the of the LNA 974 is converted to a digital signal by the ADC 976. It should be noted that at some point along the reception path, the signal will be down converted from the radio frequency to the base band frequency. The received downlink signal may be licenced communication signal or a license exempt signal.

In some embodiments, the UE may be receive or transmit but not at the same time. In other embodiments, the UE may be able to receive and transmit at the same time.

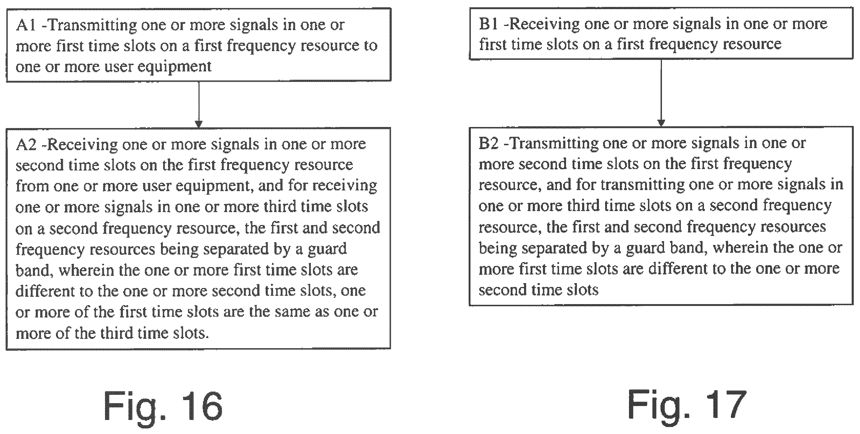

Reference is made to Fig. 16 which shows a method of some example embodiments.

This method may be performed by an apparatus such as previously discussed. The apparatus may be a base station. The apparatus may be a distributed unit of a base station arrangement. The apparatus may be a radio unit of a base station arrangement. The base station may be a macro base station.

The method may comprise as referenced A1, transmitting one or more signals in one or more first time slots on a first frequency resource to one or more user equipment.

The method may comprise as referenced A2, receiving one or more signals in one or more second time slots on the first frequency resource from one or more user equipment, and for receiving one or more signals in one or more third time slots on a second frequency resource, the first and second frequency resources being separated by a guard band, wherein the one or more first time slots are different to the one or more second time slots, one or more of the first time slots are the same as one or more of the third time slots.

Reference is made to Fig. 17 which shows a method of some example embodiments.

This method may be performed by an apparatus such as previously discussed. The apparatus may be a UE.

The method may comprise as referenced B1, receiving one or more signals in one or more first time slots on a first frequency resource.

The method may comprise as referenced B2, transmitting one or more signals in one or more second time slots on the first frequency resource, and for transmitting one or more signals in one or more third time slots on a second frequency resource, the first and second frequency resources being separated by a guard band, wherein the one or more first time slots are different to the one or more second time slots.

Therefore, although certain example embodiments were described above, by way of non-limiting and illustrative example and with reference to certain example architectures for communication systems operated by mobile network operators, technologies and standards, further example embodiments may be applied to any other suitable forms of communication systems than those illustrated and described herein.

As used herein, "at least one of the following: <a list of two or more elements>" and "at least one of <a list of two or more elements>" and similar expressions, where the list of two or more elements are joined by "and" or "or", mean at least any one of the elements, or at least any two or more of the elements, or at least all the elements. As used herein, "and/or" and similar expressions, where a list of two or more elements is joined by "and/or", means at least any one of the elements, or at least any two or more of the elements, or at least all of the elements.

As used herein and unless stated explicitly, performance of a respective feature, step, or functionality "in response to A" does not indicate that the respective feature, step, or functionality is performed immediately after "A" occurs as one or more intervening features, steps, or functionalities may be performed (at least in part) between an occurrence of the respective feature, step, or functionality and "A". Analogously, performance of a respective feature, step or functionality "based on A" does not indicate that the respective feature, step, or functionality is performed solely based on "A" as the respective feature, step, or functionality may further be based at least in part on one or more other features, steps, or functionalities in addition to "A".

**In** general, the various example embodiments of this disclosure may be implemented in hardware or special purpose circuitry, software, logic or any combination thereof. Some aspects of this disclosure may be implemented in hardware, while other aspects may be implemented in firmware or software which may be executed by a controller, microprocessor or other computing device, although the disclosure is not limited thereto. While various aspects of this disclosure may be illustrated and described as block diagrams, flow charts, or using some other pictorial representation, it is well understood that these blocks, apparatus, systems, techniques or methods described herein may be implemented in, as non-limiting and illustrative examples, hardware, software, firmware, special purpose circuits or logic, general purpose hardware or controller or other computing devices, or some combination thereof.

As used herein, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term herein, including in any claims. As a further example, as used herein, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, an integrated circuit.

The various example embodiments of this disclosure may be implemented by computer software executable by one or more data processors, such as in the processor, or by hardware, or by a combination of software and hardware.

Computer software or program, also called program product, including software routines, applets and/or macros, may be stored in any apparatus-readable data storage medium and they comprise program instructions to perform particular tasks. A computer program product may comprise one or more computer-executable components which, when the program is run, are configured to carry out any of the various example embodiments of this disclosure (or portion(s) thereof). The one or more computer-executable components may include software code, or portion(s) thereof.

Further in this regard, it should be noted that any blocks of the logic flow as in the Figs may represent program steps, or interconnected logic circuits, blocks and functions, or a combination of program steps and logic circuits, blocks and functions. The software may be stored on physical media, such as memory chips, or memory blocks implemented within the processor, magnetic media such as hard disk or floppy disks, and optical media (e.g., DVD and the data variants thereof, CD). The physical media is a non-transitory media.

The term "non-transitory," as used herein, is a limitation of the medium itself (i.e., tangible, not a signal) as opposed to a limitation on data storage persistency (e.g., RAM vs. ROM).

The memory may be of any type suitable to the local technical environment and may be implemented using any suitable data storage technology, such as semiconductor-based memory devices, magnetic memory devices and systems, optical memory devices and systems, fixed memory and removable memory.

The data processors may be of any type suitable to the local technical environment and may comprise at least one of the following: general-purpose computers; special purpose computers; microprocessors; digital signal processors (DSPs); application specific integrated circuits (ASIC); FPGA; gate level circuits; or processors (based on multi core processor architecture, as non-limiting and illustrative examples).

Example embodiments of this disclosure may be practiced in various components such as integrated circuit modules.

The foregoing description has provided, by way of non-limiting and illustrative examples, a full and informative description of the various example embodiments of this disclosure. However, various modifications and adaptations may become apparent to those skilled in the relevant arts in view of the foregoing description, when read in conjunction with the drawings and the claims. Indeed, there are further example embodiments comprising a combination of one or more example embodiments with any of the other example embodiments described herein. The scope of protection sought for some of the various example embodiments of this disclosure is set out by the claims. The various example embodiments in addition to its respective aspects and features thereof described herein that do not fall under the scope of the claims (if any) are to be interpreted as examples useful for understanding the various example embodiments of this disclosure. It should be noted that different claims with differing claim scope may be pursued in related applications, such as divisional or continuation applications.

## Claims

1. An apparatus comprising:
means for transmitting one or more signals in one or more first time slots on a first frequency resource to one or more user equipment; and
means for receiving one or more signals in one or more second time slots on the first frequency resource from one or more user equipment, and for receiving one or more signals in one or more third time slots on a second frequency resource, the first and second frequency resources being separated by a guard band,
wherein the one or more first time slots are different to the one or more second time slots, one or more of the first time slots are the same as one or more of the third time slots.

2. The apparatus as claimed in claim 1, wherein one or more the second time slots are the same as one or more of the third time slots.

3. The apparatus as claimed in any preceding claim, wherein the means for transmitting is for transmitting control information in one or more of the first time slots, the one or more first time slots used for transmitting control information being different to the third time slots.

4. The apparatus as claimed in claim 1 or 2, wherein the means for transmitting is for transmitting control information in one or more of the first time slots for a respective user equipment, and the one or more third time slots for the respective user equipment exclude the one more or more first time slots in which the control information for the respective user equipment is transmitted.

5. The apparatus as claimed in any preceding claim, wherein one or more fourth time slots on the second frequency resource are reserved for transmissions by one or more devices using an unlicensed technology.

6. The apparatus as claimed in claim 5 wherein remaining ones of the slots of the second frequency resource provide the third time slots and are reserved for uplink transmissions by one or user equipment using a licensed technology.

7. The apparatus as claimed in any preceding claim, wherein the transmitting means and receiving means are provided by a transceiver arrangement, the transceiver arrangement comprising a first bandpass filter tuned to a frequency range including the first and second frequency resources and a circulator, said circulator being provided between a power amplifier and the first bandpass filter on a transmit path and the first bandpass filter and a low noise amplifier on a receive path.

8. The apparatus as claimed in claim 7, wherein the transceiver arrangement comprises one or more second bandpass filters provided between the circulator and the low noise amplifier, at least one of the second bandpass filter being tuned to a frequency range comprising the second frequency resources.

9. The apparatus as claimed in claim 8, where one or more of the second band pass filters are tuned to a frequency range including the first frequency resources.

10. The apparatus as claimed in any of claims 7 to 9, wherein the transceiver arrangement comprises a third bandpass filter provided on the transmit path between the power amplifier and the circulator.

11. The apparatus as claimed in any of claims 1 to 6, wherein the transmitting means and receiving means are provided by a by a transceiver arrangement, the transceiver arrangement comprising a duplexer, said duplexer comprising a fourth bandpass filter tuned to a frequency range comprising the first frequency resource and a fifth bandpass filter tuned to a frequency range comprising the second frequency resources.

12. The apparatus as claimed in claim 11, wherein the transceiver arrangement comprises a circulator, said circulator being provided between a power amplifier of the transceiver arrangement and the fourth bandpass filter on a transmit path; and/or wherein the circulator is provided between a first low noise amplifier of the transceiver arrangement and the fourth bandpass filter on a receive path.

13. The apparatus as claimed in claim 12, wherein the transceiver arrangement comprises a second low noise amplifier provided between the output of the fifth band pass filter and an analogue to digital convertor of the transceiver arrangement, the output of the first low noise amplifier being provided to the analogue to digital convertor, or, wherein a second low noise amplifier is provided between the output of the fifth band pass filter and a second analogue to digital convertor of the transceiver arrangement..

14. The apparatus as claimed in claim 11 or 12, wherein a sixth bandpass filter is arranged in parallel with the duplexer, said sixth bandpass filter being provided on a receive path between an antenna array of the transceiver arrangement and a low noise amplifier of the transceiver arrangement; or, wherein an output of the fifth bandpass filter is provided to a low noise amplifier of the transceiver arrangement on a receive path.

15. A method comprising:
receiving one or more signals in one or more first time slots on a first frequency resource; and
transmitting one or more signals in one or more second time slots on the first frequency resource, and for transmitting one or more signals in one or more third time slots on a second frequency resource, the first and second frequency resources being separated by a guard band,
wherein the one or more first time slots are different to the one or more second time slots.
